# EUROPÄISCHE PATENTSCHRIFT

(11) **EP 3 114 914 B1**
(45) Veröffentlichungstag und Bekanntmachung des Hinweises auf die Patenterteilung: **19.12.2018**
(21) Anmeldenummer: 15175733.3
(22) Anmeldetag: 07.07.2015
(51) Int. Cl.: A01B 1/22, B25G 3/26

(54) **MECHANISCHE KUPPLUNGSVORRICHTUNG**
MECHANICAL COUPLING DEVICE
DISPOSITIF DE COUPLAGE MECANIQUE

(43) Veröffentlichungstag der Anmeldung: 11.01.2017
(73) Patentinhaber: Kompernaß Handelsgesellschaft mbH, 44867 Bochum (DE)
(72) Erfinder: Yilmaz, Hakan, 45881 Gelsenkirchen (DE)
(74) Vertreter: Nunnenkamp, Jörg

(56) Entgegenhaltungen:
- EP-A2- 0 174 532
- DE-A1- 2 617 622
- DE-A1- 19 827 061
- FR-A1- 2 975 033

## Beschreibung

Die Erfindung betrifft eine mechanische Kupplungsvorrichtung für insbesondere manuell beaufschlagbare Garten- bzw. Haushaltsstielgeräte, mit einer Kupplungshülse und einem darin verdrehsicher eingreifenden Kupplungsnippel, und mit zumindest einem in wenigstens eine Nut des Kupplungsnippels eingreifenden Halteglied zur zusätzlich axialen Sicherung des Kupplungsnippels, wobei die Kupplungshülse mit zwei axial beabstandeten Haltegliedern ausgerüstet ist, die jeweils in korrespondierenden Nuten im Kupplungsnippel eingreifen.

Das Halteglied ist regelmäßig an der Kupplungshülse angebracht und sorgt bei montierter Position des Kupplungsnippels in der Kupplungshülse für die gewünschte axiale Sicherung des Kupplungsnippels in der Kupplungshülse. Zusätzlich zu dieser axialen Sicherung ist eine Verdrehsicherung realisiert.

Eine mechanische Kupplungsvorrichtung in Gestalt eines Systems verschiedener Garten- bzw. Haushaltsstielgeräte wird in der DE 26 17 621 T2 beschrieben. Zur Verdrehsicherung dienen Radialführungsabschnitte am Kupplungsnippel und im Innern der Kupplungshülse. Dabei sind die Radialführungsabschnitte der Kupplungshülse und des Kupplungsnippels relativ in ihrer Länge zueinander so bemessen, dass ihr Spiel durch die Schrägstellung des Kupplungsnippels innerhalb der Kupplungshülse durch die Betätigung des Haltegliedes aufgehoben wird.

Vergleichbare mechanische Kupplungsvorrichtungen werden in der DE 28 30 945 C2 oder auch der EP 103 094 A1 beschrieben. In beiden Fällen wird eine gewisse Relativbewegung zwischen der Kupplungshülse und dem Kupplungsnippel zugelassen, um die Montage des Kupplungsnippels in der Kupplungshülse zu erleichtern. Als Folge hiervon stellen sich jedoch in der Praxis oftmals Probleme beim anschließenden Gebrauch ein.

Der gattungsbildende Stand der Technik nach der DE 198 27 061 A1 geht so vor, dass als Halteglied einerseits eine ringförmige Eindrückung und andererseits eine wellenförmige Rastnase zum Einsatz kommen. Außerdem ist eine Verdrehsicherung dergestalt realisiert, dass Querstege in formangepasste Ausnehmungen eingreifen. Dazu muss der Stiel bzw. Kupplungsnippel fast vollständig in die Kupplungshülse eingeführt werden. Außerdem wird die Verdrehsicherung ausschließlich durch den Zusammensteckvorgang geschaffen. Das ist ergänzend für den Benutzer durch geeignete Markierungen oder durch die Stellung eines Handgriffes erkennbar.

Schließlich befasst sich der Stand der Technik nach der DE 26 17 622 A1 mit einem Kupplungsnippel zur Verbindung eines Arbeitsgerätes mit einem Stiel zur Schaffung eines Gartengerätes. Zur Verdrehsicherung wird in verschiedenen Ausführungsformen mit einem rastenden Betätigungsglied in Form eines Druckknopfes gearbeitet, um insgesamt eine Einhandbedienung zur Verfügung zu stellen.

Mit Hilfe der mechanischen Kupplungsvorrichtung besteht die Möglichkeit, unterschiedliche Garten bzw. Haushaltsgeräte an ein und denselben Stiel mit der frontseitigen Kupplungshülse anschließen zu können.

Dazu muss lediglich das betreffende Garten- bzw. Haushaltsgerät mit dem angeschlossenen Kupplungsnippel in die Kupplungshülse am Stiel eingeführt und hierin mit Hilfe des Haltegliedes verankert werden. Das auf diese Weise realisierte Garten- bzw. Haushaltsstielgerät wird in der Regel manuell beaufschlagt, beispielsweise als Harke, Rechen, Dreizack, Besen, Schneeschieber etc. genutzt und eingesetzt. Hierbei werden in der Praxis oftmals erhebliche Kräfte aufgewandt, die dazu führen können, dass sich der Kupplungsnippel ganz oder teilweise aus der Kupplungshülse löst. Zumindest werden oftmals den Anwender störende Relativbewegungen des Kupplungsnippels innerhalb der Kupplungshülse, das heißt gegenüber dem Stiel, beobachtet. Hier will die Erfindung insgesamt Abhilfe schaffen.

Der Erfindung liegt das technische Problem zugrunde, eine derartige mechanische Kupplungsvorrichtung so weiter zu entwickeln, dass unter Beibehaltung eines einfachen Austausches zugleich ein einwandfreier Halt des Kupplungsnippels in der Kupplungshülse gewährleistet wird.

Zur Lösung dieser technischen Problemstellung ist eine mechanische Kupplungsvorrichtung des eingangs beschriebenen Aufbaus im Rahmen der Erfindung dadurch gekennzeichnet, dass die beiden Halteglieder als in korrespondierende Gewinde in der Kupplungshülse eingreifende Gewindestifte ausgebildet sind, wobei zur verdrehsicheren Verbindung von einerseits dem Kupplungsnippel und andererseits der Kupplungshülse miteinander wechselwirkende sowie im Querschnitt jeweils als Polygonzüge ausgebildete Radialführungsabschnitte vorgesehen sind, und wobei die beiden am Kupplungsnippel vorgesehene Nuten den zugehörigen Radialfürungsabschnitt ganz oder teilweise zwischen sich einschließen.

Das heißt, die Erfindung greift bewusst nicht auf ein (einziges) Halteglied wie der Stand der Technik zurück, sondern setzt vielmehr zwei Halteglieder an der Kupplungshülse ein. Zu den beiden axial voneinander beabstandeten Haltegliedern an der Kupplungshülse korrespondieren zugehörige Nuten im Kupplungsnippel, die über den gleichen Abstand wie die beiden Halteglieder verfügen, damit die Halteglieder in montiertem Zustand des Kupplungsnippels in der Kupplungshülse in die Nuten eingreifen können.

Auf diese Weise wird ein besonders sicherer Halt des Kupplungsnippels in der Kupplungshülse gewährleistet. Denn der Kupplungsnippel greift nach wie vor verdrehsicher in die Kupplungshülse ein, so dass Radialbewegungen des Kupplungsnippels gegenüber der Kupplungshülse praktisch ausgeschlossen sind. Mit Hilfe der beiden axial beabstandeten Halteglieder an der Kupplungshülse, die in die jeweils korrespondierenden Nuten im Kupplungsnippel eingreifen, wird zusätzlich eine einwandfreie axiale Festlegung des Kupplungsnippels gegenüber der Kupplungshülse erreicht. Als Ergebnis wird ein besonders sicherer und einwandfreier Halt des Kupplungsnippels in der Kupplungshülse zur Verfügung gestellt, so dass die bisher im Stand der Technik und in der Praxis beobachteten Relativbewegungen des Kupplungsnippels gegenüber der Kupplungshülse nicht (mehr) auftreten. Hierin sind die wesentlichen Vorteile zu sehen.

Um diesen einwandfreien Halt in der Praxis besonders vorteilhaft umsetzen zu können, beträgt der Abstand der Nuten und der Halteglieder voneinander im Regelfall mehr als das 2-fache und insbesondere mehr als das 2,5-fache des Durchmessers des Kupplungsnippels. Vorzugsweise werden sogar Abstände der Nuten respektive Halteglieder voneinander beobachtet, die mehr als das 3-fache des Durchmessers des Kupplungsnippels betragen. Außerdem hat es sich in diesem Zusammenhang bewährt, wenn der Kupplungsnippel insgesamt eine Länge aufweist, die mehr als das 5-fache und insbesondere mehr als das 6-fache seines Durchmessers beträgt. Vorzugsweise ist die Länge des Kupplungsnippels sogar so bemessen, dass seine Länge mehr als das 7-fache des Durchmessers aufweist.

Durch diese Bemessungsregeln wird ein besonders sicherer Halt des Kupplungsnippels im Innern der Kupplungshülse zur Verfügung gestellt und werden Verkantungen des Kupplungsnippels gegenüber der Kupplungshülse in montiertem Zustand zuverlässig unterdrückt. Das gilt selbst dann, wenn das auf diese Weise realisierte Garten- bzw. Haushaltsstielgerät mit erheblichen Kräften manuell von einem Bediener beaufschlagt wird. Gleichwohl ist ein einfacher Austausch des betreffenden Garten- bzw. Haushaltsgerätes möglich. Dazu weist der Kupplungsnippel vorteilhaft das angeschlossene betreffende Garten- bzw. Haushaltsgerät auf.

Zur verdrehsicheren Verbindung von einerseits dem Kupplungsnippel und andererseits der Kupplungshülse sind die miteinander wechselwirkende Radialführungsabschnitte vorgesehen. Die Radialführungsabschnitte finden sich einerseits an der Kupplungshülse und andererseits am Kupplungsnippel und wechselwirken zur Verdrehsicherung miteinander. Dazu ist der Radialführungsabschnitt an der Kupplungshülse als Kupplungsabschnitt ausgebildet. Bei dem Radialführungsabschnitt am Kupplungsnippel handelt es sich demgegenüber um einen Nippelabschnitt.

In diesem Zusammenhang hat es sich darüber hinaus bewährt, dass die Radialführungsabschnitte im Querschnitt als jeweils Polygonzug ausgelegt sind. Besonders vorteilhaft sind an dieser Stelle Radialführungsabschnitte, welche im Querschnitt als Mehrkantabschnitte und vorzugsweise Sechskantabschnitte oder Achtkantabschnitte ausgebildet sind. Entscheidend ist, dass die beiden miteinander wechselwirkenden Radialführungsabschnitte gegenseitig miteinander verdrehsicher in Eingriff sind.

Sobald die beiden Radialführungsabschnitte an einerseits der Kupplungshülse und andererseits dem Kupplungsnippel ineinandergreifen, sorgen die jeweils miteinander wechselwirkenden Kantenflächen durch ihre gegenseitige Anlage aneinander dafür, dass der Kupplungsnippel verdrehsicher in der Kupplungshülse aufgenommen wird. Die zusätzliche axiale Sicherung des Kupplungsnippels innerhalb der Kupplungshülse stellen dabei die zwei axial beabstandeten Halteglieder her, die in die korrespondierenden Nuten im Kupplungsnippel eingreifen.

Dabei ist die Auslegung im Regelfall so vorgesehen, dass die beiden am Kupplungsnippel realisierten Nuten den dortigen Radialführungsabschnitt bzw. Nippelabschnitt ganz oder teilweise zwischen sich einschließen. Auf diese Weise erreicht die Erfindung einen besonders sicheren Halt des Kupplungsnippels in der Kupplungshülse. Denn der Abstand der Nuten bzw. Halteglieder voneinander sorgt für die axiale Sicherung und verhindert zugleich ein Verkippen des Kupplungsnippels innerhalb der Kupplungshülse. Der auf diese Weise definierte und zwangsläufige Freiraum zwischen den beiden Nuten respektive Haltegliedern wird nun von den korrespondierenden Radialführungsabschnitten wenigstens teilweise und im Allgemeinen vollständig ausgefüllt. Dadurch übernimmt der Freiraum die zusätzliche Verdrehsicherung.

Die Nuten am Kupplungsnippel sind im Allgemeinen jeweils als Umfangsnuten ausgebildet. Das heißt, die Nuten erstrecken sich jeweils umfangseitig am Kupplungsnippel, und zwar überwiegend quer zur Längserstreckung des Kupplungsnippels. Darüber hinaus wird meistens so gearbeitet, dass die Nuten eine unterschiedliche Nutbreite in Axialrichtung aufweisen. Selbstverständlich können auch Nuten mit gleicher Nutbreite in Axialrichtung zum Einsatz kommen.

Im Regelfall verfügen die beiden Nuten jedoch über eine unterschiedliche Nutbreite, um die Montage des Kupplungsnippels in der Kupplungshülse zu erleichtern. In diesem Zusammenhang sieht die Erfindung vor, dass eine frontseitige Nut des Kupplungsnippels als Zentriernut mit größerer Nutbreite als eine in Steckrichtung dahinter platzierte Folgenut ausgebildet ist. Dadurch unterteilt die Zentriernut den Radialführungsabschnitt am Kupplungsnippel bzw. den Nippelabschnitt im Allgemeinen in einen frontseitigen Führungskopf und eine sich daran anschließende Führungsfläche. Auf diese Weise kann der Kupplungsnippel zunächst mit dem frontseitigen Führungskopf in die Kupplungshülse eingeführt werden. Dabei sind sogar Schrägstellungen des Kupplungsnippels gegenüber der Kupplungshülse möglich und werden prinzipiell zugelassen. In diesem Zusammenhang wird im Allgemeinen der Kupplungsnippel zunächst mit seiner Zentriernut in der Kupplungshülse festgelegt.

Da die Zentriernut über die größere Nutbreite im Vergleich zu der in Steckrichtung dahinter platzierten Folgenut verfügt, sorgt dieser Vorgang zugleich für eine Zentrierung und Ausrichtung des Kupplungsnippels. Zum Abschluss sorgt das in die Folgenut eingreifende Halteglied für die einwandfreie axiale Festlegung des Kupplungsnippels in der Kupplungshülse.

Die Halteglieder sind im Allgemeinen in gleicher axialer Orientierung an der Kupplungshülse angeordnet. Es ist aber auch möglich, die Halteglieder axial versetzt zueinander an der Kupplungshülse zu platzieren, beispielsweise in unterschiedlichen Orientierungen am Umfang.

Dadurch können die Halteglieder vom Bediener problemlos zur axialen Festlegung beaufschlagt und für den Austausch des Kupplungsnippels mit dem daran angeschlossenen Garten- bzw. Haushaltsgerät gelöst werden.

Als Halteglieder kommen erfindungsgemäß Gewindestifte zum Einsatz, die beim Eingriff in die zugehörige Nut im Kupplungsnippel für die gewünsche axiale Sicherung sorgen. Die Beaufschlagung des jeweiligen Haltegliedes mag dabei über einen angeschlossenen Bedienknopf erfolgen. Erfindungsgemäß handelt es sich bei den Haltegliedern um Gewindestifte, die in korrespondierende Gewinde in der Kupplungshülse eingreifen. Zu Manipulation des betreffenden Gewindestiftes ist ein Bedienknopf vorgesehen.

Die Kupplungshülse ist im Allgemeinen als Metallhülse oder auch Kunststoffhülse ausgebildet. Der Radialführungsabschnitt an der Kupplungshülse bzw. der Kupplungsabschnitt ist demgegenüber meistens als in die Metallhülse eingreifender Kunststoffeinsatz ausgelegt. Es kann aber auch ein Metalleinsatz zum Einsatz kommen. Bei dem Kupplungsnippel handelt es sich aus Stabilitätsgründen regelmäßig um einen Metallnippel, wenngleich an dieser Stelle auch ein Kunststoffnippel aus beispielsweise GFK (glasfaserverstärkter Kunststoff) zum Einsatz kommen kann. Auf diese Weise greift der Kupplungsnippel bzw. Metallnippel in den Kunststoffeinsatz im Innern der Metallhülse bzw. Kupplungshülse verdrehsicher ein. Im Bereich der beiden beabstandeten Halteglieder ist der Kunststoffeinsatz durchbrochen, so dass die Halteglieder mit den Nuten im Metallnippel bzw. Kupplungsnippel wechselwirken können. Dadurch wird ein besonders sicherer und kippfreier Halt des Kupplungsnippels im Innern der Kupplungshülse zur Verfügung gestellt.

Im Ergebnis beschreibt die Erfindung eine mechanische Kupplungsvorrichtung, die sich besonders zur Realisierung eines Systems von verschiedenen Garten- bzw. Haushaltsstielgeräten eignet, wie dies prinzipiell bekannt ist. Dazu lassen sich verschiedene an den jeweiligen Kupplungsnippel angeschlossene Garten- bzw. Haushaltsgeräte mechanisch mit der im Regelfall frontseitig eines Holz- oder Kunststoffstiels vorgesehenen Kupplungshülse wahlweise und je nach Bedarf koppeln.

Durch die einwandfreie verdrehsichere und axiale Halterung und Festlegung des Kupplungsnippels im Innern der Metallhülse wird nicht nur ein einfacher und funktionssicherer Austausch gewährleistet, sondern gestaltet sich die anschließende manuelle Beaufschlagung des auf diese Weise realisierten Garten- bzw. Haushaltsstielgerätes sicher und ohne mechanisches Spiel bzw. Verkantungen. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: die erfindungsgemäße mechanische Kupplungsvorrichtung in einer Frontansicht beim Montagevorgang und

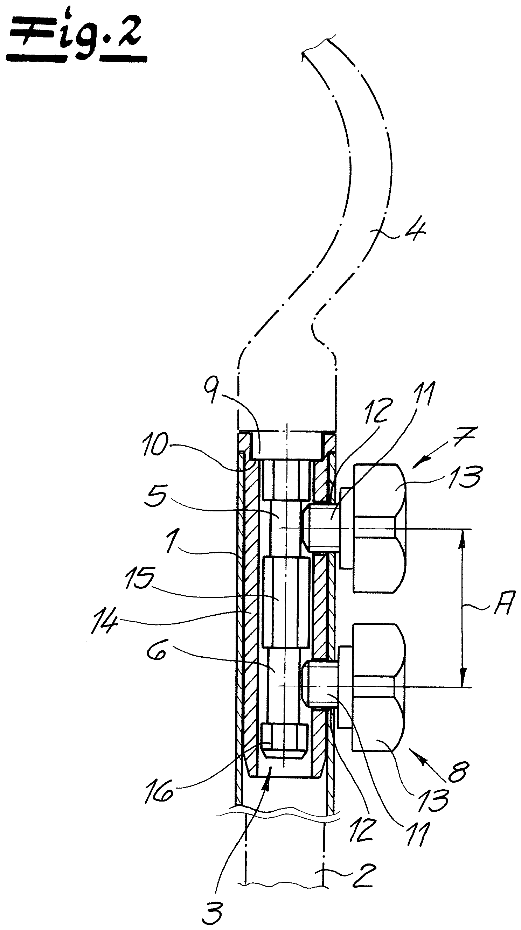

- Fig. 2: einen Schnitt durch den Gegenstand nach Fig. 1 in montiertem Zustand.

In den Figuren ist eine mechanische Kupplungsvorrichtung für insbesondere manuell beaufschlagbare Garten- bzw. Haushaltsstielgeräte 1, 2, 3, 4 dargestellt. Tatsächlich erkennt man eine Kupplungshülse 1, die sich im Ausführungsbeispiel kopfseitig an einem Stiel 2 aus Holz oder Kunststoff findet. In die Kupplungshülse 1 greift verdrehsicher ein Kupplungsnippel 3 ein. An den Kupplungsnippel 3 ist ein Garten- bzw. Haushaltsgerät 4 angeschlossen, bei welchem es sich im Ausführungsbeispiel und nicht einschränkend um einen Rechen handelt. Auf diese Weise kann ein System verschiedener Garten- bzw. Haushaltsstielgeräte 1, 2, 3, 4 realisiert werden. Dazu ist es lediglich erforderlich, beispielsweise das dargestellte Haushaltsgerät bzw. den Rechen 4 durch ein anderes Haushaltsgerät 4 mit zugehörigem Kupplungsnippel 3 zu ersetzen.

Der Kupplungsnippel 3 verfügt im Ausführungsbeispiel und erfindungsgemäß über zwei korrespondierende Nuten 5, 6. In die Nuten 5, 6 des Kupplungsnippels 3 greifen zugehörige und an der Kupplungshülse 1 vorgesehene Halteglieder 7, 8 ein. Die beiden Halteglieder 7, 8 sind ebenso wie die zugehörigen Nuten 5, 6 jeweils axial voneinander beabstandet.

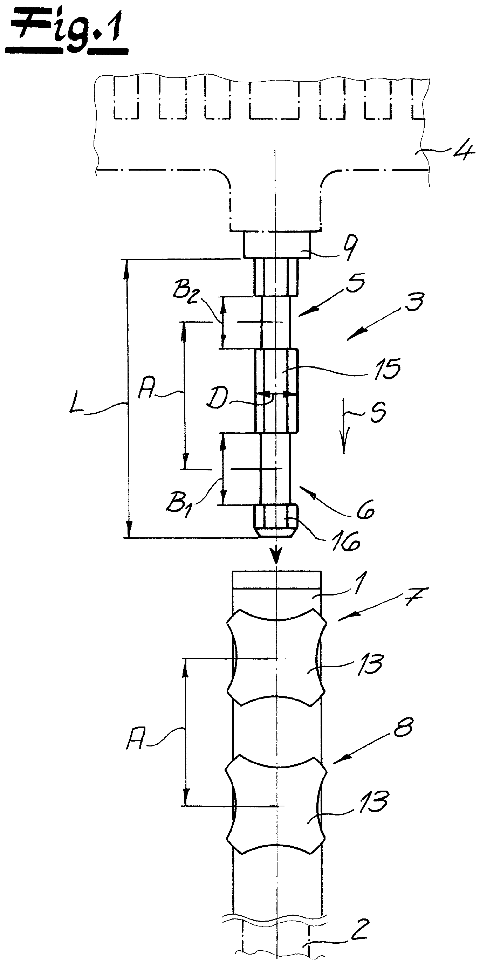

Anhand der Fig. 1 erkennt man, dass die frontseitige Nut 6 des Kupplungsnippels 3 eine größere Nutbreite B₁ als die in der durch einen Pfeil dargestellten Steckrichtung S dahinter platzierte Folgenut 5 aufweist. Denn die Folgenut 5 ist mit einer demgegenüber kleineren Nutbreite B₂ in der fraglichen Steckrichtung S ausgerüstet. Durch diese unterschiedlich ausgebildeten Nutbreiten B₁, B₂ der zugehörigen Nuten 6, 5 in Axialrichtung bzw. in der Steckrichtung S wird die Montage des Kupplungsnippels 3 in der Kupplungshülse 1 vereinfacht. Tatsächlich kann hierbei zunächst der Kupplungsnippel 3 bis zu einem gewissen Grad schräg in die Kupplungshülse 1 eingeführt werden.

Das Halteglied 7 greift in montiertem Zustand des Kupplungsnippels 3 in der Kupplungshülse 1 in die Folgenut 5 ein. Demgegenüber sorgt das Halteglied 8 mit seiner Wechselwirkung mit der Zentriernut 6 dafür, dass insgesamt eine einwandfreie axiale Sicherung des Kupplungsnippels 3 in der Kupplungshülse 1 beobachtet und umgesetzt wird.

Des Weiteren erkennt man anhand der Fig. 1, dass die beiden Nuten 5, 6 und folglich auch die zugehörigen Halteglieder 7, 8 einen Abstand A in der Axialrichtung voneinander aufweisen, welcher im Ausführungsbeispiel mehr als das 2-fache bzw. mehr als das 3-fache eines Durchmessers D des Kupplungsnippels 3 beträgt. Dadurch wird einerseits ein einwandfreier axialer Halt des Kupplungsnippels 3 im Innern der Kupplungshülse 1 zur Verfügung gestellt und andererseits ein Freiraum zwischen den beiden Nuten 5, 6 bzw. den Haltegliedern 7, 8, der im Ausführungsbeispiel überwiegend als Verdrehsicherung genutzt wird, wie dies nachfolgend noch näher erläutert wird.

Darüber hinaus erkennt man in der Darstellung nach der Fig. 1, dass die beiden Halteglieder 7 in gleicher axialer Orientierung an der Kupplungshülse 1 angeordnet sind. Grundsätzlich können die beiden Halteglieder 7, 8 aber auch bezogen auf den Umfang versetzt zueinander angeordnet werden. Bei den beiden Nuten 5, 6 handelt es sich jeweils um Umfangsnuten, die vorliegend als Kreisringnuten ausgebildet sind und sich überwiegend quer oder senkrecht zur Axialrichtung bzw. der Steckrichtung S erstrecken.

Außerdem verfügt der Kupplungsnippel 3 insgesamt über eine Länge L, die im Regelfall mehr als das 5-fache seines Durchmessers D beträgt. Im Ausführungsbeispiel wird sogar eine Länge L beobachtet, die in etwa dem 7-fachen des Durchmessers D entspricht. Dadurch kann der Kupplungsnippel 3 über seine gesamte signifikante Länge L gesehen in die Kupplungshülse 1 eintauchen und wird hier verdrehsicher und axial gesichert gehalten. Ein oberseitiger Anschlag 9 sorgt in diesem Zusammenhang dafür, dass der Kupplungsnippel 3 mit seiner gesamten Länge L in die Kupplungshülse 1 eintaucht. Dazu wechselwirkt der Anschlag 9 mit einem zugehörigen Gegenanschlag 10 frontseitig der Kupplungshülse 1 bzw. dem Kunststoffeinsatz.

Die Kupplungshülse 1 ist als Metallhülse ausgebildet. Der Kupplungsnippel 3 ist seinerseits als Metallnippel ausgelegt und mit dem angeschlossenen Gartengerät 4 aus beispielsweise Kunststoff verbunden. Da die Kupplungshülse 1 als Metallhülse ausgebildet ist, können die jeweils mit Gewindestiften 11 versehenen Halteglieder 7, 8 in zugehörigen Innengewinden 12 der Metallhülse 1 drehbar aufgenommen werden. Zur Betätigung der Halteglieder 7, 8 sind jeweils Bedienungsknöpfe 13 vorgesehen, mit deren Hilfe die Gewindestifte 11 gegenüber dem Gewinde 12 in der Kupplungshülse bzw. Metallhülse 1 heraus- oder hereingeschraubt werden können. Als Folge hiervon tauchen die Gewindestifte 11 in die zugehörigen Nuten 5, 6 ein und sorgen auf diese Weise für die gewünschte axiale Sicherung des Kupplungsnippels 3. Um den Kupplungsnippel 3 aus der Kupplungshülse 1 entfernen zu können, müssen die Gewindestifte 11 lediglich aus den zugehörigen Nuten 5, 6 herausgeschraubt werden.

Für die zusätzliche Verdrehsicherung zwischen dem Kupplungsnippel 3 und der Kupplungshülse 1 sorgen jeweils miteinander wechselwirkende Radialführungsabschnitte 14, 15. Bei den Radialführungsabschnitten 14, 15 handelt es sich einerseits um einen Radialführungsabschnitt 14 im Innern der Kupplungshülse 1, welcher als Kupplungsabschnitt 14 ausgebildet ist. Der Radialführungsabschnitt bzw. der Kupplungsabschnitt 14 im Innern der Kupplungshülse 1 ist im Ausführungsbeispiel als in die Metallhülse eingreifender Kunststoffeinsatz ausgebildet.

Bei dem Radialführungsabschnitt 15 am Kupplungsnippel 3 handelt es sich andererseits um jeweils Kantenflächen zwischen den beiden Nuten 5, 6, die einen Nippelabschnitt 15 definieren. Im Ausführungsbeispiel sind die beiden Radialführungsabschnitte 14, 15 im Querschnitt jeweils als Polygonzüge und insbesondere Mehrkantabschnitte ausgelegt. Beispielsweise handelt es sich bei den Radialführungsabschnitten 14, 15 jeweils um Sechskantabschnitte.

Sobald der Kupplungsnippel 3 in die Kupplungshülse 1 eingreift, liegen die jeweiligen Kantenflächen der Radialführungsabschnitte 14, 15 aneinander an und sorgen für die gewünschte Verdrehsicherung des Kupplungsnippels 3 in montiertem Zustand innerhalb der Kupplungshülse 1. Man erkennt, dass die beiden am Kupplungsnippel 3 vorgesehene Nuten 5, 6 den zugehörigen Radialführungsabschnitt 15 am Kupplungsnippel 3 ganz oder teilweise zwischen sich einschließen. Zusätzlich unterteilt die frontseitige Zentriernut 6 mit der größeren Nutbreite B₁ im Vergleich zu der Folgenut 5 mit der Nutbreite B₂ am Kupplungsnippel 3 den dortigen Radialführungsabschnitt 15 in einen frontseitigen Führungskopf 16 und die anschließende Führungsfläche 15 bzw. den Nippelabschnitt 15. Der frontseitige Führungskopf 16 ist ebenso wie die Führungsfläche 15 bzw. der Radialführungsabschnitt 15 insgesamt im Querschnitt als Sechskantabschnitt ausgebildet und greift ebenfalls in den korrespondierenden Radialführungsabschnitt 14 bzw. den an dieser Stelle realisierten Kunststoffeinsatz im Innern der Kupplungshülse 1 ein.

Auf diese Weise kann der Kupplungsnippel 3 problemlos in die Kupplungshülse 1 eingreifen und lässt sich hieraus unschwer entfernen. Dadurch können ganz unterschiedliche Garten- bzw. Haushaltsgeräte 4 auf den Stiel 2 aufgesetzt werden und insgesamt das Garten- bzw. Haushaltsstielgerät 1, 2, 3, 4 realisieren. Hierbei ist ein sowohl verdrehsicherer als auch axialsicherer Halt gegeben.

Für die verdrehsichere Kopplung des Kupplungsnippels 3 in der Kupplungshülse 1 sorgen die jeweils miteinander wechselwirkenden Radialführungsabschnitte 14, 15. Der axiale Halt wird dadurch gewährleistet, dass die beiden beabstandeten Nuten 5, 6 im Kupplungsnippel 3 realisiert sind, in welche die korrespondierend beabstandeten Halteglieder 7, 8 an der Kupplungshülse 1 eingreifen.

## Patentansprüche

1. Mechanische Kupplungsvorrichtung für insbesondere manuell beaufschlagbare Garten- bzw. Haushaltsstielgeräte (1, 2, 3, 4), mit einer Kupplungshülse (1) und einem darin verdrehsicher eingreifenden Kupplungsnippel (3), und mit zumindest einem in wenigstens eine Nut (5, 6) des Kupplungsnippels (3) eingreifenden Halteglied (7, 8) zur zusätzlich axialen Sicherung des Kupplungsnippels (3), wobei die Kupplungshülse (1) mit zwei axial beabstandeten Haltegliedern (7, 8) ausgerüstet ist, die in jeweils korrespondierende Nuten (5, 6) im Kupplungsnippel (3) eingreifen.
**dadurch gekennzeichnet, dass**
- die beiden Halteglieder (7, 8) als in korrespondierende Gewinde (12) in der Kupplungshülse (1) eingreifende Gewindestifte (11) ausgebildet sind, wobei
- zur verdrehsicheren Verbindung von einerseits dem Kupplungsnippel (3) und andererseits der Kupplungshülse (1) miteinander wechselwirkende sowie im Querschnitt jeweils als Polygonzüge ausgebildete Radialführungsabschnitte (14,15) vorgesehen sind, und wobei
- die beiden am Kupplungsnippel (3) vorgesehenen Nuten (5, 6) dem zugehörigen Radialführungsabschnitt (15) ganz oder teilweise zwischen sich einschließen.

2. Vorrichtung nach Anspruch 1, **dadurch gekennzeichnet, dass** der Abstand (A) der Nuten (5, 6) und der Halteglieder (7, 8) voneinander mehr als das 2-fache, insbesondere mehr als das 2,5-fache und vorzugsweise mehr als 3-fache des Durchmessers (D) des Kupplungsnippels (3) beträgt.

3. Vorrichtung nach Anspruch 1 oder 2, **dadurch gekennzeichnet, dass** der Kupplungsnippel (3) eine Länge (L) aufweist, die mehr als das 5-fache, insbesondere mehr als das 6-fache und vorzugsweise mehr als das 7-fache seines Durchmessers (D) beträgt.

4. Vorrichtung nach einem der Ansprüche 1 bis 3, **dadurch gekennzeichnet, dass** die Halteglieder (7, 8) in gleicher axialer Orientierung oder axial versetzt zueinander an der Kupplungshülse (1) vorgesehen sind.

5. Vorrichtung nach einem der Ansprüche 1 bis 4, **dadurch gekennzeichnet, dass** die Radialführungsabschnitte (14, 15) als einerseits Kupplungsabschnitt (14) an der Kupplungshülse (1) und andererseits Nippelabschnitt (15) am Kupplungsnippel (3) ausgebildet sind.

6. Vorrichtung nach Anspruch 5, **dadurch gekennzeichnet, dass** die beiden am Kupplungsnippel (3) vorgesehene Nuten (5, 6) den zugehörigen Radialführungsabschnitt (15) ganz oder teilweise zwischen sich einschließen.

7. Vorrichtung nach einem der Ansprüche 1 bis 6, **dadurch gekennzeichnet, dass** die Nuten (5, 6) am Kupplungsnippel (3) als jeweils Umfangsnuten ausgebildet sind.

8. Vorrichtung nach einem der Ansprüche 1 bis 7, **dadurch gekennzeichnet, dass** die Nuten (5, 6) mit unterschiedlicher oder gleicher Nutbreite (B₁, B₂) in Axialrichtung ausgerüstet sind.

9. Vorrichtung nach Anspruch 8, **dadurch gekennzeichnet, dass** eine in Steckrichtung (S) frontseitige Nut (6) des Kupplungsnippels (3) als Zentriernut (6) mit größerer Nutbreite (B₁) als die in Steckrichtung (S) dahinter platzierte Folgenut (5) mit demgegenüber kleinerer Nutbreite (B₂) ausgebildet ist.

10. Vorrichtung nach Anspruch 9, **dadurch gekennzeichnet, dass** die Zentriernut (6) den Radialführungsabschnitt (15) am Kupplungsnippel (3) in einen frontseitigen Führungskopf (16) und eine anschließende Führungsfläche (15) unterteilt.

11. Vorrichtung nach einem der Ansprüche 1 bis 10, **dadurch gekennzeichnet, dass** die Radialführungsabschnitte (14, 15) im Querschnitt als Mehrkantabschnitte und vorzugsweise Sechskantabschnitte oder Achtkantabschnitte ausgebildet sind.

12. Vorrichtung nach einem der Ansprüche 1 bis 11, **dadurch gekennzeichnet, dass** die Kupplungshülse (1) als Metallhülse oder Kunststoffhülse und der Kupplungsabschnitt (14) als in die Metallhülse oder Kunststoffhülse eingreifender Kunststoffeinsatz oder Metalleinsatz ausgebildet sind.

13. Vorrichtung nach einem der Ansprüche 1 bis 12, **dadurch gekennzeichnet, dass** der Kupplungsnippel (3) als Metallnippel oder Kunststoffnippel ausgebildet ist.

14. Vorrichtung nach einem der Ansprüche 1 bis 13, **dadurch gekennzeichnet, dass** der Kupplungsnippel (3) ein angeschlossenes Garten- bzw. Haushaltsgerät (4) aufweist.

## Claims

1. A mechanical coupling device for, in particular, manually operable gardening and household appliances (1, 2, 3, 4) with a coupling sleeve (1) and a coupling nipple (3) engaging therein in an twist-proof manner, and with at least one holding member (7, 8) engaging in a groove (5, 6) of the coupling nipple (3) for the additional axial securing of the coupling nipple (3), wherein the coupling sleeve (1) is equipped with two axially spaced holding members (7, 8) which each engages in corresponding grooves (5, 6) in the coupling nipple (3),
**characterised in that**
- both holding members (7, 8) are designed as threaded pins (11) engaging in corresponding threads (12) in the coupling sleeve (1), wherein
- interacting radial guiding sections (14, 15), each designed polygonally in cross-section, are provided for the twist-proof connection to each other of the coupling nipple (3) on the one hand and the coupling sleeve (1) on the other, and wherein
- the two grooves (5, 6) provided on the coupling nipple (3) fully or partially enclose the corresponding radial guiding section (15) between them.

2. The device according to claim 1, **characterised in that** the distance (A) between the grooves (5, 6) and the holding members (7, 8) is more than 2 times, in particular more than 2.5 times and preferably more than 3 times the diameter (D) of the coupling (3).

3. The device according to claim 1 or 2, **characterised in that** the coupling nipple (3) has a length (L) which is more than 5 times, in particular more than 6 times and preferably more than 7 times its diameter (D).

4. The device according to any one of claims 1 to 3, **characterised in that** the holding members (7, 8) are provided in the same axial orientation or axially offset with regard to each other on the coupling sleeve (1).

5. The device according to any one of claims 1 to 4, **characterised in that** the radial guide sections (14, 15) are designed on the one hand as a coupling section (14) on the coupling sleeve (1) and on the other hand as a nipple section (15) on the coupling nipple (3).

6. The device according to claim 5, **characterised in that** the two grooves (5, 6) provided on the coupling nipple (3) fully or partially enclose the corresponding radial guiding section (15) between them.

7. The device according to any one of claims 1 to 6, **characterised in that** the groove (5, 6) on the coupling nipple (3) are each designed as circumferential grooves.

8. The device according to any one of claims 1 to 7, **characterised in that** the grooves (5, 6) are provided with a different or with the same groove width (B₁, B₂) in the axial direction.

9. The device according to claim 8, **characterised in that** a front-side groove (6) of the coupling nipple (3) in the insertion direction (S) is designed as a centring groove (6) with a larger groove width (B₁) than the following groove (5) placed behind it in the insertion direction (S) with an, in comparison therewith, smaller groove width (B₂).

10. The device according to claim 9, **characterised in that** the centring groove (6) divides the radial guide section (15) on the coupling nipple (3) into a front-side guiding head (16) and an adjoining guide surface (15).

11. The device according to any one of claims 1 to 10, **characterised in that** in cross-section the radial guiding sections (14, 15) are designed as polygonal sections and preferably as hexagonal octagonal sections.

12. The device according to any one of claims 1 to 11, **characterised in that** the coupling sleeve (1) is designed as a metal sleeve or plastic sleeve and the coupling section (14) as a plastic insert or as a metal inset engaging in the metal sleeve or plastic sleeve.

13. The device according to any one of claims 1 to 12, **characterised in that** the coupling nipple (3) is designed as a metal nipple or as a plastic nipple.

14. The device according to any one of claims 1 to 13, **characterised in that** the coupling nipple (3) comprises a connected gardening or household appliance (4).

## Revendications

1. Dispositif d'accouplement mécanique, destiné à des instruments domestiques ou de jardinage à manche (1, 2, 3, 4), notamment actionnables manuellement, pourvu d'une douille d'accouplement (1) et d'un coupleur mâle (3) qui s'y engage de manière solidaire en rotation, et pourvu d'au moins un élément de retenue (7, 8) s'engageant dans au moins une rainure (5, 6) du coupleur mâle (3) pour assurer le blocage axial supplémentaire du coupleur mâle (3), la douille d'accouplement (1) étant équipée de deux éléments de retenue (7, 8) écartés en direction axiale, qui s'engagent dans des rainures (5, 6) respectivement correspondantes dans le coupleur mâle (3),
**caractérisé en ce que**
- les deux éléments de retenue (7, 8) sont conçus sous la forme de tiges filetées (11) s'engageant dans des taraudages (12) correspondants dans la douille d'accouplement (1),
- pour la liaison solidaire en rotation l'un avec l'autre, d'une part du coupleur mâle (3) et d'autre part, de la douille d'accouplement (1) étant prévus des segments de guidage radial (14, 15) interagissant, ainsi que prévus avec une section transversale aux tracés polygonaux, et
- les deux rainures (5, 6) prévues sur le coupleur mâle (3) enfermant entre elles, totalement ou partiellement le segment de guidage radial (15) associé.

2. Dispositif selon la revendication 1, **caractérisé en ce que** l'écart (A) mutuel entre les rainures (5, 6) et les éléments de retenue (7, 8) s'élève à plus de 2 fois, notamment à plus de 2,5 fois et de préférence à plus de 3 fois le diamètre (D) du coupleur mâle (3).

3. Dispositif selon la revendication 1 ou 2, **caractérisé en ce que** le coupleur mâle (3) présente une longueur (L) qui s'élève à plus de 5 fois, notamment à plus de 6 fois et de préférence à plus du 7 fois son diamètre (D).

4. Dispositif selon l'une quelconque des revendications 1 à 3, **caractérisé en ce que** les éléments de retenue (7, 8) sont prévus dans la même orientation axiale ou avec un déport axial réciproque sur la douille d'accouplement (1).

5. Dispositif selon l'une quelconque des revendications 1 à 4, **caractérisé en ce que** les segments de guidage radial (14, 15) sont conçus sous la forme d'une part d'un segment d'accouplement (14) sur la douille d'accouplement (1) d'autre part d'un segment mâle (15) sur le coupleur mâle (3).

6. Dispositif selon la revendication 5, **caractérisé en ce que** les deux rainures (5, 6) prévues sur le coupleur mâle (3) enferment entre elles, totalement ou partiellement le segment de guidage radial (15) associé.

7. Dispositif selon l'une quelconque des revendications 1 à 6, **caractérisé en ce que** les rainures (5, 6) sur le coupleur mâle (3) sont conçues chacune comme des rainures périphériques.

8. Dispositif selon l'une quelconque des revendications 1 à 7, **caractérisé en ce que** les rainures (5, 6) sont munies d'une largeur de rainure (B₁, B₂) différente ou identique en direction axiale.

9. Dispositif selon la revendication 8, **caractérisé en ce qu'**une rainure (6) frontale dans la direction d'enfichage (S) du coupleur mâle (3) est conçue sous la forme d'une rainure de centrage (6) pourvue d'une largeur de rainure (B₁) supérieure à la rainure suivante (5), placée derrière celle-ci dans la direction d'enfichage (S), pourvue d'une largeur de rainure (B₂) inférieure à celle-ci.

10. Dispositif selon la revendication 9, **caractérisé en ce que** la rainure de centrage (6) divise le segment de guidage radial (15) sur le coupleur mâle (3) en une tête de guidage (16) frontale et en une surface de guidage (15) qui s'y raccorde

11. Dispositif selon l'une quelconque des revendications 1 à 10, **caractérisé en ce que** les segments de guidage radial (14, 15) sont conçus avec une section transversale en forme de segments polygonaux et de préférence de segments hexagonaux ou de segments octogonaux.

12. Dispositif selon l'une quelconque des revendications 1 à 11, **caractérisé en ce que** la douille d'accouplement (1) est conçue sous la forme de douille métallique ou de douille en matière plastique et le segment d'accouplement (14) est conçu sous la forme d'insert en matière plastique ou d'insert métallique s'engageant dans la douille métallique ou dans la douille en matière plastique.

13. Dispositif selon l'une quelconque des revendications 1 à 12, **caractérisé en ce que** le coupleur mâle (3) est conçu sous la forme de mamelon métallique ou de mamelon en matière plastique.

14. Dispositif selon l'une quelconque des revendications 1 à 13, **caractérisé en ce que** le coupleur mâle (3) comporte un instrument domestique ou de jardinage (4) raccordé.
